# EUROPÄISCHE PATENTSCHRIFT

(11) **EP 3 339 081 B1**
(45) Veröffentlichungstag und Bekanntmachung des Hinweises auf die Patenterteilung: **19.02.2020**
(21) Anmeldenummer: 17002059.8
(22) Anmeldetag: 22.12.2017
(51) Int. Cl.: B60K 37/02, B60K 35/00, B60Q 3/14, B60Q 3/64

(54) **DEKORELEMENT, MODUL UND KRAFTFAHRZEUG-ZIERBAUTEIL**
DECORATIVE ELEMENT, MODULE AND MOTOR VEHICLE DECORATIVE COMPONENT
ÉLÉMENT DÉCORATIF, MODULE ET COMPOSANT DÉCORATIF POUR VÉHICULE AUTOMOBILE

(30) Priorität: 23.12.2016 DE 102016015481
(43) Veröffentlichungstag der Anmeldung: 27.06.2018
(73) Patentinhaber: Giesecke+Devrient Currency Technology GmbH, 81677 München (DE)
(72) Erfinder: Wessely, Stephan, 81477 München (DE); Teufel, Björn, 83700 Weißach (DE)

(56) Entgegenhaltungen:
- WO-A1-2011/082761
- WO-A2-2015/187522
- DE-A1-102016 201 475
- DE-U1-202010 011 267
- US-A1- 2012 142 509

## Beschreibung

Die Erfindung betrifft ein Dekorelement für Fahrzeuge, mit einer eine Sichtseite aufweisenden Dekorschicht, die an das Hindurchlassen von sichtbarem Licht ausgehend von einer Leuchtquelle angepasst ist, und einer Leuchtquelle, die auf der der Sichtseite der Dekorschicht abgewandten Seite vorgesehen ist. Die Dekorschicht basiert auf einem mit einer semitransparenten Funktionsschicht versehenen Trägersubstrat und die semitransparente Funktionsschicht so beschaffen ist, dass sie bei der Betrachtung im Auflicht eine erste, visuell erkennbare Farbe aufweist und bei der Betrachtung im Durchlicht eine zweite, visuell erkennbare Farbe aufweist und die Sichtseite der Dekorschicht im Falle, dass Licht ausgehend von der Leuchtquelle hindurchtritt, in der zweiten, visuell erkennbaren Farbe wahrnehmbar ist und im Falle, dass kein Licht ausgehend von der Leuchtquelle hindurchtritt, in der ersten, visuell erkennbaren Farbe wahrnehmbar ist. wobei die semitransparente Funktionsschicht einen mehrschichtigen Aufbau mit zwei semitransparenten metallischen Schichten und einer zwischen den zwei semitransparenten metallischen Schichten angeordneten dielektrischen Schicht auf weist oder die semitransparente Funktionsschicht drucktechnisch mittels einer Effektpigment-Zusammensetzung erhältlich ist oder die semitransparente Funktionsschicht zumindest teilweise auf der Verwendung von konventionellen Farbschichten bzw. Farblacken basiert und einen Aufbau mit zwei semitransparenten metallischen Schichten und einer dazwischen angeordneten, in einer Farbe vorliegenden Farbschicht aufweist.

Vorrichtungen zur Erzielung von Beleuchtungseffekten insbesondere im Innenraum eines Fahrzeugs sind im Stand der Technik bekannt, siehe z.B. die DE 10 2008 054 563 B4, die DE 10 2009 000 605 A1, die DE 10 2010 030 660 A1, die DE 10 2011 003 512 B3, die DE 10 2011 082 343 B4, die DE 10 2012 215 164 B4, die DE 10 2013 012 201 A1, die DE 10 2014 006 567 B4, die DE 10 2015 103 850 A1 und die DE 10 2015 105 974 A1.

Die DE 10 2008 054 563 B4 beschreibt eine Interieurkomponente, die neben einem Dekormaterial und einer Reflektorschiene, die eine Einheit bilden, eine Lichtquelle enthält, wobei Licht der Lichtquelle durch Öffnungen in die Reflektorschiene eintreten kann, um folglich mittels der Reflektorschiene Beleuchtungseffekte auf der Sichtseite des Dekormaterials zu erzielen.

Die DE 10 2009 000 605 A1 beschreibt ein Dekorelement für Fahrzeuge mit einer Dekorschicht und einer Leuchtquelle. Die sichtbare Dekoroberfläche erscheint im Falle einer fehlenden Hinterleuchtung nahezu homogen und weist im Falle einer Hinterleuchtung flexibel anpassbare optische Eigenschaften auf. Das Dekorelement umfasst eine Dekorschicht und eine Leuchtquelle, die auf der der Sichtseite der Dekorschicht abgewandten Seite vorgesehen ist, wobei die Dekorschicht eine Narbung aufweist und die Dekorschicht so ausgedünnt ist, dass die Dekorschicht im Bereich von Narbenbergen keine oder lediglich eine Resttransparenz und im Bereich von Narbentälern eine dazu erhöhte Lichttransparenz aufweist.

Die DE 10 2010 030 660 A1 beschreibt ein Innenausstattungsteil für ein Fahrzeug, das ein Lichtemissionselement zum Emittieren von Licht und ein streifenförmiges Lichtleiterelement mit einer ersten und einer zweiten Oberfläche umfasst, wobei die erste Oberfläche eine Einkopplungsfläche umfasst. Das Lichtleiterelement und das Lichtemissionselement sind so angeordnet und ausgestaltet, dass Licht von dem Lichtemissionselement über die Einkopplungsfläche in das Lichtleiterelement einkoppelbar und über die zweite Oberfläche auskoppelbar ist. Durch die Ausgestaltung des Innenausstattungsteils ist es möglich, eine Punkt- und Linienbeleuchtung mit sehr geringen Ausmaßen, insbesondere sehr geringer Linienbreite, zu erzielen.

Die DE 10 2011 003 512 B3 beschreibt ein Modul für einen Oberflächenintegrierten Schalter, insbesondere zur Verwendung in Fahrzeugen. Das Modul besteht aus einem Gehäuse, beispielsweise aus einem Kunststoff, einem Metall oder einem anderen geeigneten Material. Das Gehäuse weist auf der einer Dekoroberfläche im Fahrzeuginnenausstattungsteil zugewandten Seite eine geschlossene Oberfläche auf. Das Gehäuse weist zusätzlich auf der der Dekoroberfläche abgewandten Seite günstigstenfalls senkrecht zu der zuvor genannten geschlossenen Oberfläche angeordnete Seitenwände auf. Andere Winkelstellungen sind denkbar und hängen letztendlich vom Design des Fahrzeuginnenausstattungsteils ab. Die Seitenwände sind vorzugsweise integral bzw. einstückig mit der geschlossenen Oberfläche verbunden und bilden eine oder mehrere Kammern aus, in denen sich jeweils ein Schaltelement mit zumindest einer eine Schaltfunktion bewirkenden Funktionsschicht befindet. Die mehreren Kammern weisen jeweils identische Grundflächen auf, wobei diese bevorzugt quadratisch ausgebildet sind. Andere Formen der Grundfläche, z.B. polygon-, kreis-, ellipsen- oder sternförmig usw., und auch unregelmäßige Formen der Grundfläche sind ebenso denkbar. Insbesondere bei unregelmäßigen Formen können die Kammern auch so gestaltet sein, dass die Grundflächen zueinander gespiegelt oder gedreht vorliegen, um beispielsweise eine bestimmte Anordnung der mehreren Schaltelemente in den jeweiligen Kammern darzustellen. Durch die Anordnung der mehreren Kammern werden in bzw. auf der Funktionsoberfläche mehrere Bedienungsbereiche definiert. Um eine Hinterleuchtung zu realisieren, kann die geschlossene Oberfläche zumindest im Bereich der Bedienungsbereiche transparent oder aber zumindest transluzent ausgestaltet sein. Die Funktionsoberfläche und auch die Seitenwände können hierzu aus einem transparenten oder aber transluzenten Material hergestellt werden. Um einen unerwünschten Lichtdurchtritt zwischen den Kammern zu vermeiden, können die Seitenwände in einem Folgeschritt lichtundurchlässig gestaltet werden, beispielsweise durch das Aufbringen einer lichtundurchlässigen Schicht oder Farbe. Die sich innerhalb der Kammern befindlichen Schaltelemente bestehen aus mehreren Funktionsschichten, die vorzugsweise als scheibenartige Körper mit einer jeweils konstanten Dicke ausgebildet sind. Allen Funktionsschichten ist gemeinsam, dass Ihre Grundfläche kleiner ist als die Grundfläche der Kammer, d. h. die Seitenwände der Kammer sind zumindest bereichsweise vom Umfang der Grundfläche der Funktionsschichten beabstandet. Beispiele für Funktionsschichten sind Schichten, die eine Schaltfunktion auslösen können, wie beispielsweise Schichten, die ein piezoaktives Material enthalten oder einen kapazitiven Sensor ausbilden. Auch andere Sensorformen, wie beispielsweise Ultraschallsensoren o. ä. sind durchaus denkbar. Weiterhin sind optische Schichten denkbar, die ein zur Ausbildung einer Such- oder einer Funktionsbeleuchtung in die Kammer eingekoppeltes Licht lenken oder modifizieren. Diese Schichten weisen dazu an ihren äußeren Oberflächen oder in ihrem Inneren Strukturen auf, die zur Lichtlenkung geeignet sind. Zusätzlich können diese Elemente ein- oder mehrfarbig ausgestaltet sein. Auch Elemente zur Ausbildung einer sogenannten "Feedback-Funktion", d.h. einer Rückmeldung für den Bediener hinsichtlich der Schaltfunktion, können als Funktionsschicht enthalten sein. Hier sind zusätzlich zu den zuvor bereits genannten optischen Schichten Funktionsschichten zu benennen, die eine akustische oder haptische Rückmeldung generieren. Beispielsweise kann eine der Schichten ein sogenannter Folienlautsprecher sein, der ein akustisches Signal erzeugt, oder aber eine der Schichten ist eine Schicht mit einem piezoaktiven Material, die zur Erzeugung einer Vibration als haptisches Signal geeignet ist. Zusätzlich zu den zuvor genannten Schichten kann in einer Kammer eine Leiterplatte angeordnet sein, die elektronische Bauteile aufweisen kann, insbesondere LED's zur Ausbildung der zuvor beschriebenen Such- oder Funktionsbeleuchtung. Auch können die Funktionsschichten über die zuvor genannten Kontaktierungsmöglichkeiten mit der Leiterplatte verbunden werden. Es ist denkbar, dass über eine Platine die Kontaktierung bzw. Lichtauskopplung für mehrere Kammern, bevorzugt benachbarte Kammern erfolgt.

Die DE 10 2011 082 343 B4 beschreibt einen Dekorverbund mit einer Dekorschicht und einer Licht-leitenden Schicht zur Verwendung für Dekorelemente in Fahrzeugen. Die Dekorschicht ist mit einer Perforation versehen, wodurch Öffnungen in der Dekorschicht ausgebildet sind.

Die DE 10 2015103 850 A1 beschreibt einen Inneneinrichtungsgegenstand für Kraftfahrzeuge, aufweisend zwei verbundene Bauelemente und einen Lichtwellenleiter, der an einem der Verbindungsbereiche der Bauelemente angeordnet ist. Der Inneneinrichtungsgegenstand kann insbesondere ein Fahrzeugsitz, insbesondere dessen Randbereich, eine Instrumentenkonsole, eine Innenverkleidung, z.B. eine Türverkleidung, sein. Das Bauelement kann insbesondere ein Oberflächenelement sein, z.B. ein Bezug.

Der vorliegenden Erfindung liegt die allgemeine Aufgabe zugrunde, die Erzeugung von Beleuchtungseffekten, insbesondere im Innenraum eines Fahrzeugs, zu vereinfachen und flexibler zu gestalten.

Die Aufgabe wird durch die in den unabhängigen Ansprüchen definierten Merkmalskombinationen gelöst. Weiterbildungen der Erfindung sind Gegenstand der Unteransprüche.

### Zusammenfassung der Erfindung

1. Dekorelement für Fahrzeuge, mit einer eine Sichtseite aufweisenden Dekorschicht, die an das Hindurchlassen von sichtbarem Licht ausgehend von einer Leuchtquelle angepasst ist, und einer Leuchtquelle, die auf der der Sichtseite der Dekorschicht abgewandten Seite vorgesehen ist, dadurch gekennzeichnet, dass die Dekorschicht auf einem mit einer semitransparenten Funktionsschicht versehenen Trägersubstrat basiert und die semitransparente Funktionsschicht so beschaffen ist, dass sie bei der Betrachtung im Auflicht eine erste, visuell erkennbare Farbe aufweist und bei der Betrachtung im Durchlicht eine zweite, visuell erkennbare Farbe aufweist und die Sichtseite der Dekorschicht im Falle, dass Licht ausgehend von der Leuchtquelle hindurchtritt, in der zweiten, visuell erkennbaren Farbe wahrnehmbar ist und im Falle, dass kein Licht ausgehend von der Leuchtquelle hindurchtritt, in der ersten, visuell erkennbaren Farbe wahrnehmbar ist, wobei die semitransparente Funktionsschicht einen mehrschichtigen Aufbau mit zwei semitransparenten metallischen Schichten und einer zwischen den zwei semitransparenten metallischen Schichten angeordneten dielektrischen Schicht aufweist oder die semitransparente Funktionsschicht drucktechnisch mittels einer Effektpigment-Zusammensetzung erhältlich ist oder die semitransparente Funktionsschicht zumindest teilweise auf der Verwendung von konventionellen Farbschichten bzw. Farblacken basiert und einen Aufbau mit zwei semitransparenten metallischen Schichten und einer dazwischen angeordneten, in einer Farbe vorliegenden Farbschicht aufweist.
2. Dekorelement nach Absatz 1, wobei das Trägersubstrat eine Folie, vorzugsweise eine Polyethylenterephthalat-Folie, ist.
3. Dekorelement nach Absatz 1 oder 2, wobei die semitransparente Funktionsschicht einen mehrschichtigen Aufbau mit zwei semitransparenten metallischen Schichten und einer zwischen den zwei semitransparenten metallischen Schichten angeordneten dielektrischen Schicht aufweist und die beiden semitransparenten metallischen Schichten unabhängig voneinander aus einem Metall gebildet sind und das Metall jeweils von der Gruppe bestehend aus AI, Ag, Ni, Cr, Cu, Au oder einer Legierung eines oder mehrerer der vorstehend genannten Elemente gewählt ist und die dielektrische Schicht eine SiO₂-Schicht, eine ZnO-Schicht, eine Al₂O₃-Schicht, eine TiO₂ -Schicht, eine Schicht aus einem Nitrid oder Oxynitrid eines der Elemente Si, Zn, Al oder Ti oder eine MgF₂ -Schicht oder eine, z.B. drucktechnisch erhältliche, Nitrocellulose-Schicht ist.
4. Dekorelement nach Absatz 3, wobei die beiden semitransparenten metallischen Schichten unabhängig voneinander von Al oder Ag gewählt sind und die dielektrische Schicht eine SiO₂-Schicht ist.
5. Dekorelement nach einem der Absätze 1 bis 4, wobei die semitransparente Funktionsschicht bei der Betrachtung im Auflicht goldfarben erscheint und bei der Betrachtung im Durchlicht bläulich erscheint und die Sichtseite der Dekorschicht im Falle, dass Licht ausgehend von der Leuchtquelle hindurchtritt, bläulich erscheint und im Falle, dass kein Licht ausgehend von der Leuchtquelle hindurchtritt, goldfarben erscheint.
6. Dekorelement nach einem der Absätze 1 oder 2, wobei die semitransparente Funktionsschicht zumindest teilweise auf der Verwendung von konventionellen Farbschichten bzw. Farblacken basiert und einen Aufbau mit zwei semitransparenten metallischen Schichten und einer dazwischen angeordneten, in einer Farbe vorliegenden Farbschicht aufweist, wobei die beiden semitransparenten metallischen Schichten zusätzlich an der Außenseite jeweils mit einer weiteren Farbschicht in einer Komplementärfarbe zu der zwischen den metallischen Schichten angeordneten Farbschicht beschichtet sind.
7. Dekorelement nach einem der Absätze 1 bis 6, wobei die semitransparente Funktionsschicht durch Bestrahlung mit Laserstrahlung erhältliche, visuell erkennbare Markierungen in Form von Mustern, Zeichen oder einer Codierung aufweist, nämlich in Form von transparenten Markierungen, die sowohl im Auflicht als auch im Durchlicht für den Betrachter sichtbar sind.
8. Dekorelement nach einem der Absätze 1 bis 7, wobei die Dekorschicht zusätzlich eine opake Schicht, insbesondere eine Druckschicht oder eine Metallisierung, mit Aussparungen in Form eines Musters oder in Form von Zeichen, aufweist.
9. Dekorelement nach Absatz 1 8, wobei die opake Schicht auf der dem Betrachter zugewandten Seite der Dekorschicht vorgesehen ist.
10. Dekorelement nach Absatz 8, wobei die opake Schicht auf der dem Betrachter abgewandten Seite der Dekorschicht vorgesehen ist.
11. Dekorelement nach einem der Absätze bis 10, wobei die Leuchtquelle eine Leuchtfolie, ein Lichtleiter, eine LED oder eine OLED ist.
12. Dekorelement nach einem der Absätze 1 bis 11, wobei zwischen der semitransparenten Funktionsschicht und dem Trägersubstrat eine Prägelackschicht vorliegt, die ein geprägtes Relief aufweist.
13. Dekorelement nach Absatz 12, wobei das geprägte Relief der Prägelackschicht Mikro- und/ oder Nanostrukturen aufweist.
14. Modul für ein Kraftfahrzeug-Zierbauteil, umfassend eine Trägereinheit und ein Dekorelement nach einem der Absätze 1 bis 13.
15. Modul nach Absatz 14, umfassend eine zusätzliche opake Schicht, insbesondere eine Druckschicht oder eine Metallisierung, mit Aussparungen in Form eines Musters oder in Form von Zeichen.
16. Kraftfahrzeug-Zierbauteil mit einem Modul nach einem der Absätze 14 oder 15 oder einem Dekorelement nach einem der Absätze 1 bis 13.
17. Kraftfahrzeug-Zierbauteil nach Absatz 16, wobei das Zierbauteil eine Zierleiste, ein Zierbauteil für den Außendekor oder Innendekor, ein Zierbauteil für eine Instrumententafel, ein Zierbauteil für eine Mittelkonsole oder eine Tachometerscheibe darstellt.

### Ausführliche Beschreibung der Erfindung

Eine Betrachtung im Auflicht ist im Sinne dieser Erfindung eine Beleuchtung des jeweiligen Gegenstandes von einer Seite und eine Betrachtung des Gegenstandes von derselben Seite.

Eine Betrachtung im Durchlicht ist im Sinne dieser Erfindung eine Beleuchtung des jeweiligen Gegenstandes von einer Seite und eine Betrachtung des Gegenstandes von der gegenüberliegenden Seite.

Das erfindungsgemäße Dekorelement zeichnet sich dadurch aus, dass als Dekorschicht ein mit einer semitransparenten Funktionsschicht versehenes Trägersubstrat verwendet wird, wobei die semitransparente Funktionsschicht so beschaffen ist, dass sie bei der Betrachtung im Auflicht eine erste, visuell erkennbare Farbe aufweist und bei der Betrachtung im Durchlicht eine zweite, visuell erkennbare Farbe aufweist. Folglich ist die Sichtseite der Dekorschicht im Falle, dass Licht ausgehend von der Leuchtquelle hindurchtritt, in der zweiten, visuell erkennbaren Farbe wahrnehmbar. Im Falle, dass kein Licht ausgehend von der Leuchtquelle hindurchtritt, ist die Sichtseite der Dekorschicht in der ersten, visuell erkennbaren Farbe wahrnehmbar.

Das Trägersubstrat ist vorzugsweise eine Folie, insbesondere eine Polyethylenterephthalat(PET)-Folie. Die Folie ist bevorzugt transparent.

Die semitransparente Funktionsschicht weist bei der Betrachtung im Auflicht einerseits und bei der Betrachtung im Durchlicht andererseits unterschiedliche Farbtöne auf. Die beiden unterschiedlichen Farbtöne sind z.B. Komplementärfarben. Eine solche semitransparente Funktionsschicht ist insbesondere ein sogenanntes Fabry-Perot-Dünnschichtelement auf Grundlage eines mehrschichtigen Aufbaus mit zwei semitransparenten metallischen Schichten und einer zwischen den zwei semitransparenten metallischen Schichten angeordneten dielektrischen Schicht. Ein solcher mehrschichtiger Aufbau, der bei der Betrachtung im Auflicht goldfarben erscheint und bei der Betrachtung im Durchlicht einen blauen Farbton zeigt, ist z.B. aus der WO 2011/082761 A1 bekannt.

Geeignete mehrschichtige Aufbauten mit zwei semitransparenten metallischen Schichten und einer zwischen den zwei semitransparenten metallischen Schichten angeordneten dielektrischen Schicht haben vorzugsweise die folgende gegenständliche Beschaffenheit:
- die beiden semitransparenten metallischen Schichten werden bevorzugt von Al oder Ag gewählt; die dielektrische Schicht ist insbesondere eine SiO₂-Schicht oder eine MgF₂-Schicht, bevorzugt eine SiO₂-Schicht;
- im Falle, dass jede der beiden semitransparenten metallischen Schichten auf Al beruht, liegt die jeweilige bevorzugte Schichtdicke in einem Bereich von 5 nm bis 20 nm, insbesondere bevorzugt in einem Bereich von 10 nm bis 14 nm; die dielektrische SiO₂-Schicht hat vorzugsweise eine Schichtdicke in einem Bereich von 50 nm bis 450 nm, weiter bevorzugt in einem Bereich von 80 nm bis 260 nm und insbesondere bevorzugt in einem Bereich von 210 nm bis 260 nm, wobei die Bereiche von 80 nm bis 100 nm und von 210 nm bis 240 nm speziell für die Bereitstellung eines Gold/Blau-Farbwechsels besonders bevorzugt werden;
- im Falle, dass jede der beiden semitransparenten metallischen Schichten auf Ag beruht, liegt die jeweilige bevorzugte Schichtdicke in einem Bereich von 15 nm bis 30 nm, insbesondere bevorzugt von 15 nm bis 25 nm; die dielektrische SiO₂-Schicht hat vorzugsweise eine Schichtdicke in einem Bereich von 50 nm bis 450 nm, weiter bevorzugt in einem Bereich von 80 nm bis 260 nm und insbesondere bevorzugt in einem Bereich von 210 nm bis 260 nm, wobei die Bereiche von 80 nm bis 100 nm und von 210 nm bis 240 nm speziell für die Bereitstellung eines Gold/Blau-Farbwechsels besonders bevorzugt werden.

Die oben genannten mehrschichtigen Aufbauten mit zwei semitransparenten metallischen Schichten und einer zwischen den zwei semitransparenten metallischen Schichten angeordneten dielektrischen Schicht können einen symmetrischen Dreischichtaufbau aufweisen, bei dem sowohl das Material, als auch die Schichtdicke der beiden semitransparenten metallischen Schichten identisch sind. Alternativ kann aber auch ein asymmetrischer Dreischichtaufbau vorliegen, bei dem das Material und/ oder die Schichtdicke der beiden semitransparenten metallischen Schichten unterschiedlich sind, z.B.
- ein Silber/ Dielektrikum/ Aluminium-Schichtsystem, wobei die Schichtdicken der Silber-Schicht und der Aluminium-Schicht identisch oder verschieden sind;
- ein Silber/ Dielektrikum/ Silber-Schichtsystem, wobei die Schichtdicken der beiden Silber-Schichten verschieden sind;
- ein Aluminium/Dielektrikum/Aluminium-Schichtsystem, wobei die Schichtdicken der beiden Aluminium-Schichten verschieden sind.

Die oben genannten mehrschichtigen Schichtaufbauten ermöglichen nicht nur die Erzeugung einer semitransparenten Funktionsschicht, die bei Betrachtung im Auflicht goldfarben erscheint und bei der Betrachtung im Durchlicht einen blauen Farbton zeigt, sondern es können je nach Wahl der Schichtdicke insbesondere der dielektrischen Schicht weitere Farbwechsel erzeugt werden, z.B.
- im Auflicht Magenta, im Durchlicht Blau-Grün;
- im Auflicht Türkis, im Durchlicht Orange-Gelb;
- im Auflicht Gold, im Durchlicht Blau-Violett;
- im Auflicht Silber, im Durchlicht Violett.

Eine semitransparente Funktionsschicht, die bei der Betrachtung im Auflicht einerseits und bei der Betrachtung im Durchlicht andererseits unterschiedliche Farbtöne aufweist, kann des Weiteren auf einer Effektpigment-Zusammensetzung basieren. Druckschichten auf Basis einer Effektpigment-Zusammensetzung, die bei der Betrachtung im Auflicht eine andere Farbe wie bei der Betrachtung im Durchlicht zeigt, insbesondere einen Gold/Blau-Farbwechsel, einen Gold/Violett-Farbwechsel, einen Grün-Gold/Magenta-Farbwechsel, einen Violett/Grün-Farbwechsel oder einen Silber/Opak-Farbwechsel, werden z.B. in der WO 2011/064162 A2 beschrieben. Die Pigmente weisen bevorzugt von Ende-zu-Ende eine längste Abmessung ("longest dimension of edge length") in einem Bereich von 15 nm bis 1000 nm auf und beruhen auf einem Übergangsmetall, das von der Gruppe bestehend aus Cu, Ag, Au, Zn, Cd, Ti, Cr, Mn, Fe, Co, Ni, Ru, Rh, Pd, Os, Ir und Pt gewählt ist. Das Übergangsmetall ist bevorzugt Ag. Das Aspektverhältnis (d.h. das Verhältnis der längsten Abmessung von Ende-zu-Ende bezogen auf die Dicke) ist vorzugsweise mindestens 1,5, insbesondere in einem Bereich von 1,5 bis 300. Das Verhältnis des Bindemittels zu Metallpigment ist vorzugsweise unterhalb von 10:1, insbesondere unterhalb 5:1. In Abhängigkeit von der Wahl des Aspektverhältnisses des Pigments, seiner längsten Abmessung von Ende-zu-Ende und der Einstellung des Pigment/Bindemittel-Verhältnisses lässt sich die Farbe bei Betrachtung der Druckschicht in Transmission und die Farbe bei Betrachtung in Reflexion einstellen (z.B. Blau in Transmission und Silber, Gold, Bronze, Kupfer oder Violett in Reflexion; darüber hinaus auch Violett, Magenta, Pink, Grün oder Braun in Transmission und verschiedenen Farben in Reflexion, die von der Wahl des Pigment/Bindemittel-Verhältnisses abhängen). Farben mit Gold/Blau-Farbwechsel zwischen Reflexion und Transmission (anders gesagt, zwischen Auflicht- und Durchlicht-Betrachtung) sind z.B. in den Beispielen 1, 2 und 3 in der Tabelle 1 der WO 2011/064162 A2 genannt. Des Weiteren zeigt Beispiel 4 eine Farbe mit Gold/Violett-Farbwechsel, Beispiel 5 eine Farbe mit Grün-Gold/Magenta-Farbwechsel, Beispiel 7 eine Farbe mit Violett/Grün-Farbwechsel und Beispiel 8 eine Farbe mit Silber/Opak-Farbwechsel.

Eine semitransparente Funktionsschicht, die bei der Betrachtung im Auflicht einerseits und bei der Betrachtung im Durchlicht andererseits unterschiedliche Farbtöne aufweist, kann des Weiteren zumindest teilweise auf der Verwendung von konventionellen Farbschichten bzw. Farblacken basieren und gemäß einer der folgenden Varianten beschaffen sein:
1) zwei semitransparente metallische Schichten (z.B. 5 nm bis 15 nm Al) und eine dazwischen angeordnete, bevorzugt 1 bis 2 Mikrometer dicke, Farbschicht (z.B. in blauer Farbe); bevorzugt sind die beiden semitransparenten metallischen Schichten zusätzlich an der Außenseite jeweils mit einer weiteren, bevorzugt 1 bis 2 Mikrometer dicken, Farbschicht, insbesondere in einer Komplementärfarbe zu der zwischen den metallischen Schichten angeordneten Farbschicht (z.B. in gelber Farbe), beschichtet (auf diese Weise ergibt sich der folgende Schichtaufbau mit einem Gold/Blau-Farbwechsel in Auflicht- bzw. Durchlicht-Ansicht: gelbe Druckschicht - semitransparente metallische Schicht - blaue Druckschicht - semitransparente metallische Schicht - gelbe Druckschicht); des Weiteren ist z.B. das folgende, die Schichten a) bis c) umfassende Schichtsystem möglich: a) gelb eingefärbte, "silberne" Spiegelschicht, erhältlich mittels gelb eingefärbter Metallpigmente, die aus der WO 2005/051675 A2 bekannt sind (die Metallpigmente beruhen auf einem Metall, das vorzugsweise von der Gruppe bestehend aus Aluminium, Edelstahl, Nichrome, Gold, Silber, Platin und Kupfer gewählt ist; das Metall ist insbesondere bevorzugt Aluminium, wobei der mittlere Teilchendurchmesser bevorzugt in einem Bereich von 8 bis 15 µm, weiter bevorzugt in einem Bereich von 9 bis 10 µm liegt, gemessen mit einem Coulter LS130 Laserdiffraktionsgranulometer; eine solche Druckfarbe ermöglicht die Bereitstellung einer "silbernen" Spiegelschicht), b) blaue, bevorzugt 1 bis 2 Mikrometer dicke, Farbschicht, c) gelb eingefärbte, "silberne" Spiegelschicht, erhältlich mittels gelb eingefärbter Metallpigmente, die aus der WO 2005/051675 A2 bekannt sind (siehe hierzu die Beschreibung zur Schicht a));
2) das obige Schichtsystem kann alternativ so ausgestaltet werden, dass einige der Schichten auf der Vorderseite des Trägersubstrats angeordnet sind und einige Schichten auf der Rückseite des Trägersubstrats angeordnet sind; z.B. ist das folgende, die Schichten a) bis f) umfassende Schichtsystem möglich: a) gelbe, bevorzugt 1 bis 2 Mikrometer dicke, Farbschicht, b) semitransparente metallische Schicht (z.B. 5 nm bis 15 nm Aluminium), c) Trägersubstrat (z.B. (semi-)transparenter Kunststoff), d) blaue, bevorzugt 1 bis 2 Mikrometer dicke, Farbschicht, e) semitransparente metallische Schicht (z.B. 5 nm bis 15 nm Aluminium), f) gelbe, bevorzugt 1 bis 2 Mikrometer dicke, Farbschicht; des Weiteren ist z.B. das folgende, die Schichten a) bis d) umfassende Schichtsystem möglich: a) gelb eingefärbte, "silberne" Spiegelschicht, erhältlich mittels gelb eingefärbter Metallpigmente, die aus der WO 2005/051675 A2 bekannt sind (die Metallpigmente beruhen auf einem Metall, das vorzugsweise von der Gruppe bestehend aus Aluminium, Edelstahl, Nichrome, Gold, Silber, Platin und Kupfer gewählt ist; das Metall ist insbesondere bevorzugt Aluminium, wobei der mittlere Teilchendurchmesser bevorzugt in einem Bereich von 8 bis 15 µm, weiter bevorzugt in einem Bereich von 9 bis 10 µm liegt, gemessen mit einem Coulter LS130 Laserdiffraktionsgranulometer; eine solche Druckfarbe ermöglicht die Bereitstellung einer "silbernen" Spiegelschicht), b) Trägersubstrat (z.B. (semi-)transparenter Kunststoff), c) blaue, bevorzugt 1 bis 2 Mikrometer dicke, Farbschicht, d) gelb eingefärbte, "silberne" Spiegelschicht, erhältlich mittels gelb eingefärbter Metallpigmente, die aus der WO 2005/051675 A2 bekannt sind (siehe hierzu die Beschreibung zur Schicht a));
3) die oben unter 1) und 2) genannten Schichtsysteme können selbstverständlich hinsichtlich der gelben Farbschicht und der blauen Farbschicht dahingehend variiert werden, dass anstelle von Gelb bzw. Blau andere Farben verwendet werden, die insbesondere zueinander komplementär sind.

Infolge der semitransparenten Funktionsschicht ist die Sichtseite der Dekorschicht des erfindungsgemäßen Dekorelements für den Betrachter im Falle fehlender Hinterleuchtung in metallischer Farbe, z.B. in goldener Farbe, wahrnehmbar. Im Falle der Hinterleuchtung des Dekorelements ist die Sichtseite der Dekorschicht für den Betrachter in einer angenehmen, hellen Farbe, z.B. in blauem Farbton, wahrnehmbar. Der optische Eindruck des erfindungsgemäßen Dekorelements kann je nach Aufbau der semitransparenten Funktionsschicht vielseitig, mit hoher Flexibilität und optisch äußerst ansprechend ausgestaltet werden.

Gemäß einer bevorzugten Ausführungsform kann die semitransparente Funktionsschicht durch Bestrahlung mit Laserstrahlung erhältliche, visuell erkennbare Markierungen in Form von Mustern, Zeichen oder einer Codierung aufweisen. Die visuell erkennbaren Markierungen werden dabei in der semitransparenten Funktionsschicht erzeugt, insbesondere in Form von transparenten Markierungen, die sowohl im Auflicht als auch im Durchlicht für den Betrachter sichtbar sind. Mittels Bestrahlung mit Laserstrahlung sind insbesondere filigrane Markierungen erzeugbar. Als Laser eignet sich z.B. ein Nd:YAG-Laser (Neodym-dotierter Yttrium-Aluminium-Granat-Laser), d.h. ein Festkörperlaser, der als aktives Medium einen Neodym-dotierten YAG-Kristall verwendet und meist infrarote Strahlung mit der Wellenlänge 1064 nm emittiert. Die visuell erkennbaren Markierungen eignen sich z.B. für Dekorzwecke oder als Fälschungsschutz zur Überprüfung der Echtheit oder als Diebstahlsicherung. Die visuell erkennbaren Markierungen können insbesondere in Form von versteckten visuell erkennbaren Markierungen vorliegen, die für den Betrachter kaum erkennbar sind. Die visuell erkennbaren Markierungen können z.B. in Form eines (z.B. zweidimensionalen) Barcodes erzeugt werden.

Das Dekorelement kann zusätzlich zu der Dekorschicht weitere Dekormaterialien enthalten, z.B. Tiefziehfolie (wie etwa TPO, PVC oder TPU, insbesondere als Kompakt- oder Schaumfolie, auch mit einem zwei-oder mehrschichtigen Aufbau), Planware (mit oder ohne Textilrücken) und/ oder einen zusätzlichen Träger zur Stabilisierung des Dekorelements. Des Weiteren kann vorzugsweise auf der der Sichtseite der Dekorschicht abgewandten Seite eine Zwischenschicht vorgesehen werden, die als Unterware bezeichnet wird. Durch die Struktur und Art der Zwischenschicht kann der Durchleuchtungseindruck gesteuert werden. Beispielsweise kann die Zwischenschicht Dickensprünge aufweisen, bedruckt oder gefärbt sein, um Bereiche stärkerer oder schwächerer Durchleuchtung zu definieren. Die Zwischenschicht kann insbesondere in Form einer Haptikschicht vorliegen. Auf diese Weise kann ein weiches Dekorelement hergestellt werden, wie es im Fahrzeugbau eingesetzt wird. Dazu eignet sich eine Haptikschicht aus Textil oder Vlies.

Wird die Haptikschicht zwischen Leuchtquelle und Dekorschicht angebracht, ist die Haptikschicht vorzugsweise transparent oder zumindest teiltransparent, um die Hinterleuchtung des Dekorelements zu vereinfachen. In anderen Ausführungsformen kann die Haptikschicht perforiert sein oder Aussparungen an der Stelle einer oder mehrerer Leuchtquellen aufweisen. Zur Anpassung des optischen Eindrucks bei Hinterleuchtung kann die Haptikschicht farbig sein oder es kann eine weitere Schicht vorgesehen sein, welche die optische Erscheinung der Hinterleuchtung beeinflusst. Darüber hinaus kann die Haptikschicht auch Strom leitend sein. Das Anbringen der Haptikschicht kann an einem ebenen oder an einem bereits vorgeformten Dekorschichtzuschnitt erfolgen. Der Zuschnitt kann darüber hinaus auch bereits ausgedünnt sein. Alternativ ist es denkbar, die Dekorschicht mit bereits angebrachter Haptikschicht auszudünnen.

Das Dekorelement kann gegebenenfalls zumindest eine Verdunklungsschicht aufweisen, wodurch ein störender optischer Eindruck der Dekorschicht bei fehlender Hinterleuchtung und/oder im Falle der Hinterleuchtung vermieden werden kann. Z.B. kann ein störender optischer Eindruck durch eine schwarze oder farbige Verdunklungsschicht auf der der Sichtseite abgewandten Seite der Dekorschicht oder auf der dem Betrachter zugewandten Seite der Dekorschicht vermieden werden. Die Verdunklungsschicht kann z.B. in Form einer Druckschicht oder in Form einer Metallisierung vorliegen und insbesondere Aussparungen in Form eines Musters oder in Form von Zeichen aufweisen. Im Falle der Hinterleuchtung kann durch die Aussparungen hindurchtretendes Licht vom Betrachter wahrgenommen werden.

Vorzugsweise sind zwei oder mehrere Schichten des Dekorelements als Verbund ausgebildet, um das Dekorelement modular zu gestalten und damit einfacher und vielseitiger einsetzbar zu machen. Insbesondere kann die Dekorschicht, ggf. mit Verdunklungsschicht, und Haptikschicht als Verbund ausgebildet sein. Dazu können die verschiedenen Schichten verklebt sein, vorzugsweise mit einem transparenten Haftvermittler. Bei Verwendung moderner Leuchtquellen, wie beispielsweise einer Leuchtfolie oder eines Leuchtlacks, kann auch die Leuchtquelle mit einer Haptikschicht und/ oder direkt mit der Dekorschicht als Verbund ausgebildet sein.

Als Leuchtquellen sind insbesondere Lichtleiter, Leuchtfolien, Leuchtlacke, LEDs oder OLEDs geeignet, die durch ihr geringes Gewicht, ihren geringen Platzbedarf und ihrer schwachen oder fehlenden Wärmeabstrahlung für die Verwendung mit Dekorelementen im Fahrzeugbau besonders geeignet sind. Die Verwendung einer Leuchtfolie wird besonders bevorzugt, weil sich eine auf einem Trägersubstrat (z.B. PET-Folie) mittels Aufdampfen erzeugte semitransparente Funktionsschicht (z.B. mit einem Al/SiO_{2/}Al-Aufbau) besonders einfach auf die Leuchtfolie aufbringen lässt. Unter dem Begriff "Leuchtfolie" ist hierin eine elektrolumineszierende Leuchtfolie zu verstehen.

Die Dekorschicht kann eine zusätzliche Folie, z.B. eine TPO-Folie, aufweisen. Insbesondere bei der Verwendung einer TPO-Folie hat sich herausgestellt, dass eine minimale Dicke der Dekorschicht von 0,02 cm bis 0,2 cm einen guten Kompromiss aus Hinterleuchtbarkeit und Stabilität der Dekorschicht darstellt. Die Dekorschicht kann darüber hinaus weitere Materialien oder Dekorschichten aufweisen, z.B. Leder, Kunstleder, Papier, Holz, Glas, Metall, Textilien, Faserverbünde, insbesondere Naturfaserverbünde oder Kombinationen zweier oder mehrerer der vorstehend genannten Elemente. Die Dekorschicht kann ferner mit einer zumindest einteiligen transparenten Folie oder einem (Schutz-)Lack beschichtet sein, auch ein transparenter Deckel oberhalb der Dekorschicht ist möglich.

Die Herstellung des erfindungsgemäßen Dekorelements kann insbesondere so erfolgen, dass eine z.B. 20 µm bis 70 um dicke Kunststofffolie (z.B. PET-Folie) zunächst mittels Aufdampfen mit einem semitransparenten Fabry-Perot-Dünnschichtelement versehen wird, z.B. einem Al/SiO₂/Al-Aufbau oder einem Ag/SiO_{2/}Ag-Aufbau. Die so erhaltene Kunststofffolie kann anschließend gegebenenfalls auf eine zusätzliche Folie, z.B. TPO-Folie, oder auf weitere Materialien oder Dekorschichten appliziert werden, z.B. mittels einer Klebschicht.

Die Herstellung des erfindungsgemäßen Dekorelements kann gemäß einer weiteren Variante so erfolgen, dass eine z.B. 20 µm bis 70 µm dicke Kunststofffolie (z.B. PET-Folie) zunächst mittels Bedrucken mit einer Effektpigment-Zusammensetzung (siehe z.B. die WO 2011/064162 A2) mit einer semitransparenten Funktionsschicht versehen wird. Die so erhaltene Kunststofffolie kann anschließend gegebenenfalls auf eine zusätzliche Folie, z.B. TPO-Folie, oder auf weitere Materialien oder Dekorschichten appliziert werden, z.B. mittels einer Klebschicht.

Das Dekorelement, das Modul sowie das Zierbauteil gemäß der vorliegenden Erfindung eignen sich zur Verwendung in Kraftfahrzeugen, insbesondere zur Bereitstellung eines Interieurteils oder Aussendekorteils in Land-, Wasser- oder Luftfahrzeugen, sowie zur Bereitstellung eines (Kraftfahrzeug-)Kennzeichens oder (Kraftfahrzeug-)Nummernschilds. Das Zierbauteil kann insbesondere eine Zierleiste, ein Zierbauteil für den Außendekor oder Innendekor, ein Zierbauteil für eine Instrumententafel, ein Zierbauteil für eine Mittelkonsole, ein Teil der Türinnenverkleidung, eine Tachometerscheibe, ein Kennzeichen oder ein Nummernschild darstellen. Des Weiteren sind Anwendungen in der Form von hinterleuchteten Bedienelementen, z.B. hinterleuchtete Knöpfe oder Schalter, denkbar. Darüber hinaus können die erfindungsgemäßen Gegenstände zur Bereitstellung einer Ambiente-Beleuchtung dienen, die das Wohlbefinden der Insassen eines Fahrzeugs steigert.

Weiterhin kann das Modul, das das erfindungsgemäße Dekorelement umfasst, insbesondere auf einem Gehäuse (hierin auch als Trägereinheit bezeichnet) basieren. Das Gehäuse kann z.B. aus einem Kunststoff, einem Metall oder einem anderen geeigneten Material bestehen.

Weitere Ausführungsbeispiele sowie Vorteile der Erfindung werden nachfolgend anhand der schematisch stark vereinfachten Figuren erläutert, bei deren Darstellung auf eine maßstabs- und proportionsgetreue Wiedergabe verzichtet wurde, um die Anschaulichkeit zu erhöhen.

Es zeigen:
- Figur 1: ein erfindungsgemäßes Zierbauteil gemäß einem ersten Ausführungsbeispiel in Draufsicht; und
- Figur 2: das erfindungsgemäße Zierbauteil gemäß dem ersten Ausführungsbeispiel in Querschnittansicht.

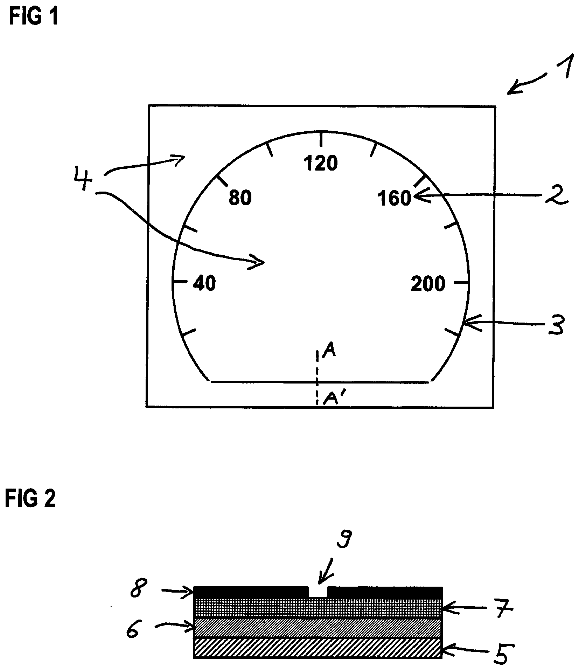

Figur 1 zeigt ein erfindungsgemäßes Zierbauteil, im Beispiel ein Tachometerfeld 1 eines Kraftfahrzeugs, gemäß einem ersten Ausführungsbeispiel in Draufsicht. Das Tachometerfeld 1 enthält ein Dekorelement mit einer eine Sichtseite aufweisenden Dekorschicht.

Das Tachometerfeld 1 enthält Ziffern 2 und eine Skala 3 mit einer kreisförmigen Umrandung und entlang der Umrandung angeordneten Balken. Die Ziffern 2 und die Skala 3 verkörpern den Vordergrund des Tachometerfelds 1, der sich vor dem Hintergrund 4 des Tachometerfelds 1 abhebt.

Im Falle fehlender Hinterleuchtung erscheinen die Ziffern 2 und die Skala 3 dem Betrachter in metallisch goldener Farbe. Der Hintergrund 4 des Tachometerfelds wird vom Betrachter als eine homogene, schwarze Fläche wahrgenommen.

Im Falle der Hinterleuchtung leuchten sowohl die Ziffern 2, als auch die Skala 3 in blauer Farbe auf. Der Hintergrund 4 des Tachometerfelds wird vom Betrachter weiterhin als eine homogene, schwarze Fläche wahrgenommen.

Figur 2 zeigt einen Ausschnitt des Tachometerfelds 1 der Figur 1 entlang der gestrichelten Linie A-A' in Querschnittansicht.

Das Dekorelement das Tachometerfelds 1 enthält eine elektrolumineszierende Leuchtfolie 5 ("EL-Leuchtfolie, weiß" der Firma Conrad Electronic SE). Oberhalb der Leuchtfolie 5 befindet sich ein Trägersubstrat 6, im vorliegenden Fall eine transparente PET-Folie mit einer Dicke von 30 µm. Das Trägersubstrat 6 weist auf seiner Oberseite eine mittels Aufdampfen erhältliche semitransparente Funktionsschicht 7 auf. Die semitransparente Funktionsschicht 7 hat einen mehrschichtigen Aufbau mit zwei semitransparenten Al-Schichten und einer zwischen den zwei semitransparenten Al-Schichten angeordneten SiO₂-Schicht. Die semitransparente Funktionsschicht 7 erscheint bei der Betrachtung im Auflicht goldfarben und zeigt bei der Betrachtung im Durchlicht einen blauen Farbton. Oberhalb der semitransparenten Funktionsschicht 7 befindet sich eine mit schwarzer, deckender Farbe erzeugte opake Druckschicht 8. Die opake Druckschicht 8 enthält Aussparungen 9, durch die die Ziffern 2 und die Skala 3 gebildet werden.

Das Trägersubstrat 6 ist mittels einer Klebschicht auf die Leuchtfolie 5 aufgebracht.

Das in der Figur 2 gezeigte Dekorelement kann selbstverständlich weitere Dekormaterialien aufweisen.

Darüber hinaus kann das in der Figur 2 gezeigte Dekorelement, in dem die Leuchtquelle in Form einer Leuchtfolie 5 als integraler Bestandteil enthalten ist, alternativ so ausgestaltet sein, dass die Leuchtquelle außerhalb des Dekorelements als separater Bestandteil vorliegt.

Weiterhin kann das in der Figur 2 gezeigte Dekorelement zu einem Modul ausgestaltet werden, in dem das Dekorelement z.B. von einer Trägereinheit getragen wird.

Ein Dekorelement gemäß einem zweiten Ausführungsbeispiel, das in den Figuren nicht gezeigt ist, ist an das erste Ausführungsbeispiel angelehnt. Das Dekorelement enthält als Leuchtquelle eine elektrolumineszierende Leuchtfolie ("EL-Leuchtfolie, weiß" der Firma Conrad Electronic SE). Oberhalb der Leuchtfolie befindet sich ein Trägersubstrat, im vorliegenden Fall eine transparente PET-Folie mit einer Dicke von 30 µm. Das Trägersubstrat weist auf seiner Oberseite eine mittels Aufdampfen erhältliche semitransparente Funktionsschicht auf. Die semitransparente Funktionsschicht hat einen mehrschichtigen Aufbau mit zwei semitransparenten Al-Schichten und einer zwischen den zwei semitransparenten Al-Schichten angeordneten SiO₂-Schicht. Die semitransparente Funktionsschicht erscheint bei der Betrachtung im Auflicht goldfarben und zeigt bei der Betrachtung im Durchlicht einen blauen Farbton. In die semitransparente Funktionsschicht wurde durch Bestrahlung mittels eines Nd:YAG-Lasers ein zweidimensionaler Barcode eingebracht. Die Laserstrahlung bewirkt dabei eine Veränderung der semitransparenten Funktionsschicht (wahrscheinlich eine Ablation bzw. Verdampfung des Metalls), sodass in der semitransparenten Funktionsschicht eine sowohl im Auflicht als auch im Durchlicht für den Betrachter sichtbare transparente, farblose Markierung in Form eines zweidimensionalen Barcodes erzeugt wird. Das Dekorelement eignet sich z.B. zur Verwendung in Kraftfahrzeugen für den Außen- oder Innendekor, insbesondere als Diebstahlsicherung oder als Fälschungsschutz.

Gemäß weiteren Varianten zu den obigen, ersten und zweiten Ausführungsbeispielen basiert die semitransparente Funktionsschicht auf den weiter oben beschriebenen Effektpigment-Zusammensetzungen oder auf der Verwendung von konventionellen Farbschichten bzw. Farblacken. Z.B. ist die semitransparente Funktionsschicht gemäß einer Variante wie folgt beschaffen:
zwei semitransparente metallische Schichten (z.B. 5 nm bis 15 nm Al) und eine dazwischen angeordnete, bevorzugt 1 bis 2 Mikrometer dicke, Farbschicht (z.B. in blauer Farbe); bevorzugt sind die beiden semitransparenten metallischen Schichten zusätzlich an der Außenseite jeweils mit einer weiteren, bevorzugt 1 bis 2 Mikrometer dicken, Farbschicht, insbesondere in einer Komplementärfarbe zu der zwischen den metallischen Schichten angeordneten Farbschicht (z.B. in gelber Farbe), beschichtet (auf diese Weise ergibt sich der folgende Schichtaufbau mit einem Gold/Blau-Farbwechsel in Auflicht- bzw. Durchlicht-Ansicht: gelbe Druckschicht - semitransparente metallische Schicht - blaue Druckschicht - semitransparente metallische Schicht - gelbe Druckschicht).

Ein Dekorelement bzw. Zierbauteil gemäß einem dritten Ausführungsbeispiel ist an das erste Ausführungsbeispiel angelehnt. Hierbei handelt es sich um ein Kraftfahrzeug(KFZ)-Kennzeichen bzw. KFZ-Nummernschild, bei dem die Aussparungen 9 in der opaken Druckschicht 8 die Ziffern und/ oder Buchstaben des Kennzeichens bzw. Nummernschilds bilden.

Gemäß weiteren Varianten zu den obigen Ausführungsbeispielen ist zwischen der semitransparenten Funktionsschicht und dem Trägersubstrat eine UV-Prägelackschicht angeordnet, die ein geprägtes Relief aufweist, insbesondere ein Mikro- und/ oder Nanostrukturen aufweisendes Relief. Auf diese Weise können betrachtungswinkelabhängige optische Effekte eingebracht werden.

## Patentansprüche

1. Dekorelement (1) für Fahrzeuge, mit einer eine Sichtseite aufweisenden Dekorschicht, die an das Hindurchlassen von sichtbarem Licht ausgehend von einer Leuchtquelle (5) angepasst ist, und einer Leuchtquelle (5), die auf der der Sichtseite der Dekorschicht abgewandten Seite vorgesehen ist, **dadurch gekennzeichnet, dass** die Dekorschicht auf einem mit einer semitransparenten Funktionsschicht (7) versehenen Trägersubstrat (6) basiert und die semitransparente Funktionsschicht (7) so beschaffen ist, dass sie bei der Betrachtung im Auflicht eine erste, visuell erkennbare Farbe aufweist und bei der Betrachtung im Durchlicht eine zweite, visuell erkennbare Farbe aufweist und die Sichtseite der Dekorschicht im Falle, dass Licht ausgehend von der Leuchtquelle (5) hindurchtritt, in der zweiten, visuell erkennbaren Farbe wahrnehmbar ist und im Falle, dass kein Licht ausgehend von der Leuchtquelle (5) hindurchtritt, in der ersten, visuell erkennbaren Farbe wahrnehmbar ist, wobei die semitransparente Funktionsschicht (7) einen mehrschichtigen Aufbau mit zwei semitransparenten metallischen Schichten und einer zwischen den zwei semitransparenten metallischen Schichten angeordneten dielektrischen Schicht aufweist oder die semitransparente Funktionsschicht (7) drucktechnisch mittels einer Effektpigment-Zusammensetzung erhältlich ist oder die semitransparente Funktionsschicht (7) zumindest teilweise auf der Verwendung von konventionellen Farbschichten bzw. Farblacken basiert und einen Aufbau mit zwei semitransparenten metallischen Schichten und einer dazwischen angeordneten, in einer Farbe vorliegenden Farbschicht aufweist.

2. Dekorelement nach Anspruch 1, wobei das Trägersubstrat (6) eine Folie, vorzugsweise eine Polyethylenterephthalat-Folie, ist.

3. Dekorelement nach Anspruch 1 oder 2, wobei die semitransparente Funktionsschicht (7) einen mehrschichtigen Aufbau mit zwei semitransparenten metallischen Schichten und einer zwischen den zwei semitransparenten metallischen Schichten angeordneten dielektrischen Schicht aufweist und die beiden semitransparenten metallischen Schichten unabhängig voneinander aus einem Metall gebildet sind und das Metall jeweils von der Gruppe bestehend aus Al, Ag, Ni, Cr, Cu, Au oder einer Legierung eines oder mehrerer der vorstehend genannten Elemente gewählt ist und die dielektrische Schicht eine SiO₂-Schicht, eine ZnO-Schicht, eine Al₂O₃-Schicht, eine TiO₂-Schicht, eine Schicht aus einem Nitrid oder Oxynitrid eines der Elemente Si, Zn, Al oder Ti oder eine MgF₂-Schicht oder eine, z.B. drucktechnisch erhältliche, Nitrocellulose-Schicht ist.

4. Dekorelement nach Anspruch 3, wobei die beiden semitransparenten metallischen Schichten unabhängig voneinander von Al oder Ag gewählt sind und die dielektrische Schicht eine SiO₂-Schicht ist.

5. Dekorelement nach einem der Ansprüche 1 bis 4, wobei die semitransparente Funktionsschicht (7) bei der Betrachtung im Auflicht goldfarben erscheint und bei der Betrachtung im Durchlicht bläulich erscheint und die Sichtseite der Dekorschicht im Falle, dass Licht ausgehend von der Leuchtquelle (5) hindurchtritt, bläulich erscheint und im Falle, dass kein Licht ausgehend von der Leuchtquelle (5) hindurchtritt, goldfarben erscheint.

6. Dekorelement nach einem der Ansprüche 1 oder 2, wobei die semitransparente Funktionsschicht (7) zumindest teilweise auf der Verwendung von konventionellen Farbschichten bzw. Farblacken basiert und einen Aufbau mit zwei semitransparenten metallischen Schichten und einer dazwischen angeordneten, in einer Farbe vorliegenden Farbschicht aufweist, wobei die beiden semitransparenten metallischen Schichten zusätzlich an der Außenseite jeweils mit einer weiteren Farbschicht in einer Komplementärfarbe zu der zwischen den metallischen Schichten angeordneten Farbschicht beschichtet sind.

7. Dekorelement nach einem der Ansprüche 1 bis 6, wobei die semitransparente Funktionsschicht durch Bestrahlung mit Laserstrahlung erhältliche, visuell erkennbare Markierungen in Form von Mustern, Zeichen oder einer Codierung aufweist, nämlich in Form von transparenten Markierungen, die sowohl im Auflicht als auch im Durchlicht für den Betrachter sichtbar sind.

8. Dekorelement nach einem der Ansprüche 1 bis 7, wobei die Dekorschicht zusätzlich eine opake Schicht (8), insbesondere eine Druckschicht oder eine Metallisierung, mit Aussparungen (9) in Form eines Musters oder in Form von Zeichen, aufweist.

9. Dekorelement nach Anspruch 8, wobei die opake Schicht (8) auf der dem Betrachter zugewandten Seite der Dekorschicht vorgesehen ist.

10. Dekorelement nach Anspruch 8, wobei die opake Schicht (8) auf der dem Betrachter abgewandten Seite der Dekorschicht vorgesehen ist.

11. Dekorelement nach einem der Ansprüche 1 bis 10, wobei die Leuchtquelle (5) eine Leuchtfolie, ein Lichtleiter, eine LED oder eine OLED ist.

12. Dekorelement nach einem der Ansprüche 1 bis 11, wobei zwischen der semitransparenten Funktionsschicht (7) und dem Trägersubstrat (6) eine Prägelackschicht vorliegt, die ein geprägtes Relief aufweist.

13. Dekorelement nach Anspruch 12, wobei das geprägte Relief der Prägelackschicht Mikro- und/ oder Nanostrukturen aufweist.

14. Modul für ein Kraftfahrzeug-Zierbauteil, umfassend eine Trägereinheit und ein Dekorelement nach einem der Ansprüche 1 bis 13.

15. Modul nach Anspruch 14, umfassend eine zusätzliche opake Schicht, insbesondere eine Druckschicht oder eine Metallisierung, mit Aussparungen in Form eines Musters oder in Form von Zeichen.

16. Kraftfahrzeug-Zierbauteil mit einem Modul nach einem der Ansprüche 14 oder 15 oder einem Dekorelement nach einem der Ansprüche 1 bis 13.

17. Kraftfahrzeug-Zierbauteil nach Anspruch 16, wobei das Zierbauteil eine Zierleiste, ein Zierbauteil für den Außendekor oder Innendekor, ein Zierbauteil für eine Instrumententafel, ein Zierbauteil für eine Mittelkonsole oder eine Tachometerscheibe darstellt.

## Claims

1. A decorative element (1) for vehicles, with a decorative layer having a viewing side which is adapted to the passage of visible light emanating from an illumination source (5), and an illumination source (5) provided on the side facing away from the viewing side of the decorative layer, **characterized in that** the decorative layer is based on a carrier substrate (6) equipped with a semitransparent functional layer (7) and the semitransparent functional layer (7) is of such a nature that, when viewed in incident light, it has a first, visually recognizable color and, when viewed in transmitted light, it has a second, visually recognizable color, and the viewing side of the decorative layer can be perceived in the second, visually recognizable color in the case that light emanating from the illumination source (5) passes through, and can be perceived in the first, visually recognizable color in the case that no light emanating from the illumination source (5) passes through, wherein the semitransparent functional layer (7) has a multilayer structure with two semitransparent metallic layers and a dielectric layer arranged between the two semitransparent metallic layers or the semitransparent functional layer (7) is obtainable by printing technology by means of an effect pigment composition or the semitransparent functional layer (7) is based at least partially on the employment of conventional ink layers or color lacquers and has a structure with two semitransparent metallic layers and an ink layer arranged therebetween which is present in a color.

2. The decorative element according to claim 1, wherein the carrier substrate (6) is a foil, preferably a polyethylene terephthalate foil.

3. The decorative element according to claim 1 or 2, wherein the semitransparent functional layer (7) has a multilayer structure with two semitransparent metallic layers and a dielectric layer arranged between the two semitransparent metallic layers and the two semitransparent metallic layers are mutually independently formed of a metal and the metal is selected respectively from the group composed of Al, Ag, Ni, Cr, Cu, Au or an alloy of one or several of the aforementioned elements and the dielectric layer is a SiO₂ layer, a ZnO layer, an Al₂O3 layer, a TiO₂ layer, a layer of a nitride or oxynitride of one of the elements Si, Zn, Al or Ti or a MgF₂ layer or a nitrocellulose layer obtainable, for example, by printing technology.

4. The decorative element according to claim 3, wherein the two semitransparent metallic layers are mutually independently selected from Al or Ag and the dielectric layer is a SiO₂ layer.

5. The decorative element according to any of claims 1 to 4, wherein the semitransparent functional layer (7) appears golden colored when viewed in incident light and appears bluish when viewed in transmitted light and the viewing side of the decorative layer appears bluish in the case that light emanating from the illumination source (5) passes through and appears golden colored in the case that no light emanating from the illumination source (5) passes through.

6. The decorative element according to either of claims 1 or 2, wherein the semitransparent functional layer (7) is based at least partially on the employment of conventional ink layers and/or color lacquers and has a structure with two semitransparent metallic layers and an ink layer arranged therebetween which is present in a color, wherein the two semitransparent metallic layers are additionally coated on the outer side respectively with a further ink layer in a complementary color to the ink layer arranged between the metallic layers.

7. The decorative element according to any of claims 1 to 6, wherein the semitransparent functional layer has visually recognizable markings in the form of patterns, characters or a coding obtainable by irradiation with laser radiation, namely in the form of transparent markings which are visible for the viewer both in incident light and in transmitted light.

8. The decorative element according to any of claims 1 to 7, wherein the decorative layer additionally has an opaque layer (8), in particular a printed layer or a metallization, with recesses (9) in the form of a pattern or in the form of characters.

9. The decorative element according to claim 8, wherein the opaque layer (8) is provided on the side of the decorative layer facing the viewer.

10. The decorative element according to claim 8, wherein the opaque layer (8) is provided on the side of the decorative layer facing away from the viewer.

11. The decorative element according to any of claims 1 to 10, wherein the illumination source (5) is a luminous foil, a light guide, an LED or an OLED.

12. The decorative element according to any of claims 1 to 11, wherein between the semitransparent functional layer (7) and the carrier substrate (6) an embossing lacquer layer is present which has an embossed relief.

13. The decorative element according to claim 12, wherein the embossed relief of the embossing lacquer layer has microstructures and/or nanostructures.

14. A module for an ornamental component of a motor vehicle, comprising a carrier unit and a decorative element according to any of claims 1 to 13.

15. The module according to claim 14, comprising an additional opaque layer, in particular a printed layer or a metallization with recesses in the form of a pattern or in the form of characters.

16. An ornamental component for a motor vehicle with a module according to either of claims 14 or 15 or a decorative element according to any of claims 1 to 13.

17. The ornamental component for a motor vehicle according to claim 16, wherein the ornamental component is an ornamental strip, an ornamental component for exterior decoration or interior decoration, an ornamental component for an instrument panel, an ornamental component for a center console or a tachometer disk.

## Revendications

1. Elément décoratif (1) pour véhicules, ayant une couche décorative présentant une face offerte à la vue, adaptée à laisser passer de la lumière visible émanant d'une source lumineuse (5), et une source lumineuse (5) prévue sur le côté opposé à la face offerte à la vue de la couche décorative, **caractérisé en ce que** la couche décorative est basée sur un substrat porteur (6) pourvu d'une couche fonctionnelle (7) semi-transparente, et que la couche fonctionnelle (7) semi-transparente est telle que, lors de l'observation en lumière incidente, elle présente une première couleur, visuellement reconnaissable, et que, lors de l'observation en lumière transmise, elle présente une deuxième couleur, visuellement reconnaissable, et que la face offerte à la vue de la couche décorative est, dans le cas où de la lumière émanant de la source lumineuse (5) passe à travers, perceptible dans la deuxième couleur, visuellement reconnaissable, et est, dans le cas où nulle lumière émanant de la source lumineuse (5) ne passe à travers, perceptible dans la première couleur, visuellement reconnaissable, cependant que la couche fonctionnelle (7) semi-transparente présente une structure multicouche ayant deux couches métalliques semi-transparentes et une couche diélectrique agencée entre les deux couches métalliques semi-transparentes, ou que la couche fonctionnelle (7) semi-transparente peut être obtenue par impression au moyen d'une composition de pigments à effets, ou que la couche fonctionnelle (7) semi-transparente est au moins partiellement basée sur l'utilisation de couches conventionnelles de peinture ou de laque colorée et comporte une structure ayant deux couches métalliques semi-transparentes et une couche de peinture en une couleur agencée entre elles.

2. Elément décoratif selon la revendication 1, cependant que le substrat porteur (6) est une feuille, de préférence une feuille de polyéthylène téréphtalate.

3. Elément décoratif selon la revendication 1 ou 2 cependant que la couche fonctionnelle (7) semi-transparente présente une structure multicouche ayant deux couches métalliques semi-transparentes et une couche diélectrique agencée entre les deux couches métalliques semi-transparentes, et que les deux couches métalliques semi-transparentes sont, indépendamment l'une de l'autre, constituées d'un métal, et que le métal est respectivement choisi parmi le groupe consistant en Al, Ag, Ni, Cr, Cu, Au ou en un alliage d'un ou de plusieurs des éléments précités, et que la couche diélectrique est une couche de SiO₂, une couche de ZnO, une couche de Al₂O₃, une couche de TiO₂, une couche en un nitrure ou oxynitrure d'un des éléments Si, Zn, Al ou Ti, ou une couche de MgF₂ ou couche de nitrocellulose pouvant par exemple être obtenue par impression.

4. Elément décoratif selon la revendication 3, cependant que les deux couches métalliques semi-transparentes sont, indépendamment l'une de l'autre, choisies en Al ou Ag, et que la couche diélectrique est une couche de SiO₂.

5. Elément décoratif selon une des revendications de 1 à 4, cependant que la couche fonctionnelle (7) semi-transparente apparaît de couleur dorée lors de l'observation en lumière incidente, et apparaît de couleur bleuâtre lors de l'observation en lumière transmise, et que la face offerte à la vue de la couche décorative apparaît bleuâtre dans le cas où de la lumière émanant de la source lumineuse (5) passe à travers, et apparaît de couleur dorée dans le cas où nulle lumière émanant de la source lumineuse (5) ne passe à travers.

6. Elément décoratif selon une des revendications 1 ou 2, cependant que la couche fonctionnelle (7) semi-transparente est au moins partiellement basée sur l'utilisation de couches conventionnelles de peinture ou de laque colorée et comporte une structure ayant deux couches métalliques semi-transparentes et une couche de peinture en une couleur agencée entre elles, cependant que les deux couches métalliques semi-transparentes sont en outre, sur la face extérieure, respectivement revêtues d'une autre couche de peinture dans une couleur complémentaire à la couche de peinture agencée entre les couches métalliques.

7. Elément décoratif selon une des revendications de 1 à 6, cependant que la couche fonctionnelle semi-transparente comporte des marquages visuellement reconnaissables pouvant être obtenus par irradiation au rayonnement laser, sous forme de motifs, caractères ou d'une codification, à savoir sous forme de marquages transparents visibles pour l'observateur tant en lumière incidente qu'en lumière transmise.

8. Elément décoratif selon une des revendications de 1 à 7, cependant que la couche décorative comporte en outre une couche opaque (8), en particulier une couche imprimée ou une métallisation, ayant des évidements (9) sous forme d'un motif ou sous forme de caractères.

9. Elément décoratif selon la revendication 8, cependant que la couche opaque (8) est prévue sur la face de la couche décorative tournée vers l'observateur.

10. Elément décoratif selon la revendication 8, cependant que la couche opaque (8) est prévue sur la face de la couche décorative non tournée vers l'observateur.

11. Elément décoratif selon une des revendications de 1 à 10, cependant que la source lumineuse (5) est une feuille lumineuse, un conduit de lumière, une LED ou une OLED.

12. Elément décoratif selon une des revendications de 1 à 11, cependant que, entre la couche fonctionnelle (7) semi-transparente et le substrat porteur (6), il y a une couche de laque de gaufrage ayant un relief gaufré.

13. Elément décoratif selon la revendication 12, cependant que le relief gaufré de la couche de laque de gaufrage présente des microstructures et/ou des nanostructures.

14. Module destiné à un composant ornemental pour véhicules, comportant une unité support et un élément décoratif selon une des revendications de 1 à 13.

15. Module selon la revendication 14, comprenant une couche opaque supplémentaire, en particulier une couche imprimée ou une métallisation, ayant des évidements (9) sous forme d'un motif ou sous forme de caractères.

16. Composant ornemental pour véhicules ayant un module selon une des revendications 14 ou 15 ou un élément décoratif selon une des revendications de 1 à 13.

17. Composant ornemental pour véhicules selon la revendication 16, cependant que le composant ornemental représente une moulure ornementale, un composant ornemental pour le décor extérieur ou le décor intérieur, un composant ornemental pour un tableau de bord, un composant ornemental pour une console centrale ou un cadran de tachymètre.
